# EUROPEAN PATENT SPECIFICATION

(11) **EP 1 553 843 B1**
(45) Date of publication and mention of the grant of the patent: **16.05.2007**
(21) Application number: 02774083.6
(22) Date of filing: 31.05.2002
(51) Int. Cl.: A23C 1/16, A23C 9/142, A23C 19/05, A23J 1/20, A23J 3/08

(54) **MONOVALENT SALT ENHANCES SOLUBILITY OF MILK PROTEIN CONCENTRATE**
EINWERTIGES SALZ VERBESSERT DIE LÖSLICHKEIT VON MILCHPROTEINKONZENTRAT
SEL MONOVALENT AMELIORANT LA SOLUBILITE D'UN CONCENTRE DE PROTEINE DE LAIT

(30) Priority: 31.05.2001 NZ 51209801; 08.06.2001 NZ 51228101
(43) Date of publication of application: 20.07.2005
(73) Proprietor: NEW ZEALAND DAIRY BOARD, Wellington 1 (NZ)
(72) Inventor: CARR, Alistair, Palmerston North (NZ); BHASKAR,Ganugapati,Vijaya Fonterra Research Center, Palmerston North (NZ); RAM, Satyendra Fonterra Research Center, Palmerston North (NZ)
(74) Representative: Brown, John D.
(86) International application number: PCT/NZ2002/000105
(87) International publication number: WO 2002/096208

(56) References cited:
- WO-A1-00/51440
- ZBIKOWSKA A. ET AL.: 'Effect of mineral salts on molecular state and solubility of sodium coprecipitate of milk proteins' POLISH JOURNAL OF FOOD AND NUTRITION SCIENCES vol. 7/48, no. 2, 1998, pages 241 - 250, XP008049306
- JOHNS J.E.M. ET AL.: 'The effect of the replacement of calcium with sodium ions in acid when on the functional properties of whey protein concentrates' NEW ZELAND JOURNAL OF DIARY SCIENCE AND TECHNOLOGY vol. 16, 1981, pages 79 - 86, XP008049305
- VARNAM A.H.,SUTHERLAND J.P.: 'Milk and milk products:technology, chemistry and microbiology', 1994, CHAPMAN & HALL pages 162 - 181, XP002991981

## Description

### TECHNICAL FIELD

This invention relates to milk products, processes for their preparation and use, particularly in cheese manufacture.

### BACKGROUND ART

A "milk protein concentrate" (MPC) is a milk protein product in which greater than 55%, preferably greater than 75%, of the dry matter is milk protein and the ratio of casein to whey proteins is approximately that of milk. Such concentrates are known in the art. MPCs are frequently described with the % dry matter as milk protein being appended to "MPC". For example MPC70 is an MPC with 70% of the dry matter as milk protein.

The term "milk protein isolate" (MPI) refers to a milk protein composition comprising a substantially unaltered proportion of casein to whey proteins wherein the dry matter consists of greater than 85% milk protein. Such isolates are known in the art.

These products differ from milk concentrates in that they are high in protein and low in fat and lactose. They differ from skim milk concentrates in that they are high in protein and low in lactose.

One use for MPC and MPI is in cheese manufacture. By addition of these to increase the protein concentration of milk used in the manufacture of cheese, cheese making can be made more consistent and more efficient.

Using evaporation and drying, it is possible to obtain dried MPC and MPI. The key problem in manufacturing a dried high protein milk protein concentrate is that such products are generally very insoluble at cold temperatures. This is particularly a problem where the milk protein content is 85 % or more. However even at milk protein contents as low at 70% it is also a problem. In addition the solubility at all temperatures declines on storage.

Also these dried products suffer from the disadvantage that they are associated with the formation of nuggets in the cheese. Nuggets are thin protein gels of a different colour in the cheese. Nugget formation is consistently a problem when dried MPI with 85% dry matter as milk protein is used.

Nugget formation occurs on some but not all occasions when a dried MPC with 70% dry matter as milk protein is used. These problems can be overcome by use of elevated temperatures after mixing the dried MPC or MPI with the milk. However, this adds an extra step to the cheese manufacturing process.

WO 01/41578 falling under Article 54(3) EPC describes methods for preparing dried MPC or MPI using calcium removal by one of (1) use of a cation exchanger (2) acidification and dialysis and (3) chelation. However a need for a simple method for preparing dried MPC and MPI with good solubility properties remains as these methods involve either extra processing steps or addition of chelating agents.

WO 0051440 discloses a method for preparing MPC having good solubility.

An object of the present invention is to provide an improved method for preparing a dried milk protein product with enhanced solubility properties and/or a reduced tendency to cause nugget formation in cheesemaking without the need for use of cation exchange, acidification or addition of chelation agents, or at least to provide the public with a useful choice..

### DISCLOSURE OF THE INVENTION

In one aspect, the invention provides a method for preparing a dried enhanced-solubility MPC or MPI product comprising:
(a) providing an MPI or MPC having at least 70% dry matter as milk protein in aqueous solution/suspension;
(b) adding at least one monovalent salt in an amount that confers enhanced solubility on the product when dried; and
(c) drying the product,
wherein the amount of cation added is 0.013-0.30 moles of cation per 100g protein.

Preferably between salt addition and drying steps, this process and other processes of the invention include a dewatering step, preferably using evaporation.

The term "enhanced-solubility" refers to the property of a product which on reconstitution into a 5% w/v solution provides less sediment on centrifugation for 10 minutes at 700g relative to the corresponding product without salt treatment. For example the enhanced-solubility may be solubility at 20°C where there is less than 5% sediment on centrifugation at 10 minutes at 700g.

Additionally or alternatively the enhanced solubility may be demonstrable at a range of temperatures below 60°C. In some cases the enhanced solubility will be enhanced solubility following storage. That particular property may not be readily measurable immediately after manufacture but becomes apparent subsequently.

In another aspect the monovalent or divalent salt is added directly to the skim milk used to prepare the MPI or MPC. Thus the invention provides a method for preparing a dried enhanced-solubility MPC or MPI product comprising:
(a) providing a skim milk in the form of an aqueous solution/suspension;
(b) adding at least one monovalent salt;
(c) concentrating the solution obtained by ultrafiltration, optionally with diafiltration to form an MPI or MPC having at least 70% dry weight as protein and
(d) drying to prepare a dried product with enhanced solubility,
wherein the amount of cation added is 0.013-0.30 moles of cation per 100g protein.

In the process of this aspect of the invention, the amount of salt used is greater to allow for loss during ultrafiltration and any diafiltration. This may be calculated so that the ratio of added salt to protein at the time of drying is equivalent to that in the first aspect of the invention at the same stage.

In a further aspect the monovalent salt is added during diafiltration. Thus there is provided a method of preparing a dried enhanced-solubility MPC or MPI comprising:
(a) providing a skim milk solution in the form of an aqueous solution/suspension;
(b) concentrating the skim milk by ultrafiltration, with diafiltration, to form an MPI or MPC having at least 70% dried weight as protein;
(c) drying to prepare a dried product with enhanced solubility;
wherein the diafiltration medium comprises at least one monovalent salt and the MPC or MPI formed contains 0.013-0.30 moles of added cation per 100g protein.
wherein the diafiltration medium comprises at least one monovalent salt. Again, the ratio of added salt to protein at the time of drying may be calculated to be the same to that in the first aspect of the invention.

In a further aspect, the monovalent salt is added to the MPC or MPI during or after a dewatering step which reduces the water content of the MPI or MPC, but does not dry the product. Thus there is provided a method for preparing a dried enhanced-solubility MPC or MPI comprising:
(a) providing an MPI or MPC having at least 70% dry matter as milk protein in aqueous solution/suspension;
(b) removing part of the water from the MPC or MPI;
(c) adding to the concentrated MPC or MPI at least monovalent salt in an amount that confers solubility on the product;
(d) drying the product;
wherein the amount of cation added in 0,013 - 0,30 moles of cation per 100g protein.
In a preferred embodiment the dewatering step is an evaporation step.

Common to each of the above aspects of the invention is the addition of an edible monovalent salt. Preferred salts are sodium and potassium salts, preferably chlorides. Sodium salts are currently preferred, especially sodium chloride. Divalent salts may be added additionally, including calcium salts. Salts which may be used include Mg, Fe and Zn salts.

The MPC or MPI may be prepared by conventional methods using ultrafiltration optionally with diafiltration. The dewatering and drying steps may also be those conventionally used.

The starting material is preferably freshly prepared MPI or MPC in aqueous solution/suspension as opposed to being reconstituted and dried. However it is also possible to reconstitute MPC or MPI with poor reconstitution properties and use the method of the invention to improve its properties. Because of the poor reconstitution properties, reconstitution is carried out at temperature sufficient to solubilise it, for example 50°C. However following processing according to the invention improved solubility at lower temperature can be obtained.

By manipulating the choice of sodium or potassium, or the pH of the retentate post ultrafiltration and diafiltration, it is possible to vary the flavour of the product. Typically the pH used would be in the range 6.2-7.0. For some circumstances it will also be useful to provide micronutrient cations in addition to sodium or potassium.

The drying techniques used in the invention include thermal falling film evaporation and spray drying. Drying may be proceeded by dewatering.

The term "skim milk" includes skim milks which have undergone some pretreatment which does not substantially alter the proportions of casein to whey proteins.

An example of such a pretreatment would include for example a pH treatment or an ionic exchange treatment. However, skim milk, particularly freshly prepared skim milk, is a preferred starting material.

It is noted that the term "addition of a monovalent or divalent salt" includes methods of increasing the salt content indirectly, for example by addition of a base such as sodium hydroxide or potassium hydroxide following addition of a buffer, not itself composed of mono and divalent salts.

The amount of monovalent salt to be added is generally an amount which will provide an increase in the cation to protein ratio of 0.013-0.30 moles per 100g protein, preferably 0.035-0.25 moles per 100g protein, most preferably 0.035-0.10 moles per 100g protein. For divalent salts the amount to be added is lower - 0.004-0.15 moles per 100g protein, preferably 0.006-0.08 moles per 100g protein.

The solubility properties of the products of the process of the invention make the resulting dried MPC and MPI advantageous in the preparation of a variety of products. For example the increased solubility allows for more ease of use in incorporation into beverages. Also, the dried MPC and MPI of the invention may be advantageously used in cheese manufacture for avoidance of nugget formation.

It is noted that by changing the drying conditions one can make considerable changes to the solubility of the dried powder. In general a higher outlet temperature results in a decrease in solubility and a reduction in functional properties of the dried powder. It is recognised that through manipulation of the drying conditions one can enhance or reduce the effect that salt addition has on the functional properties of the powder produced.

### BRIEF DESCRIPTION OF DRAWINGS

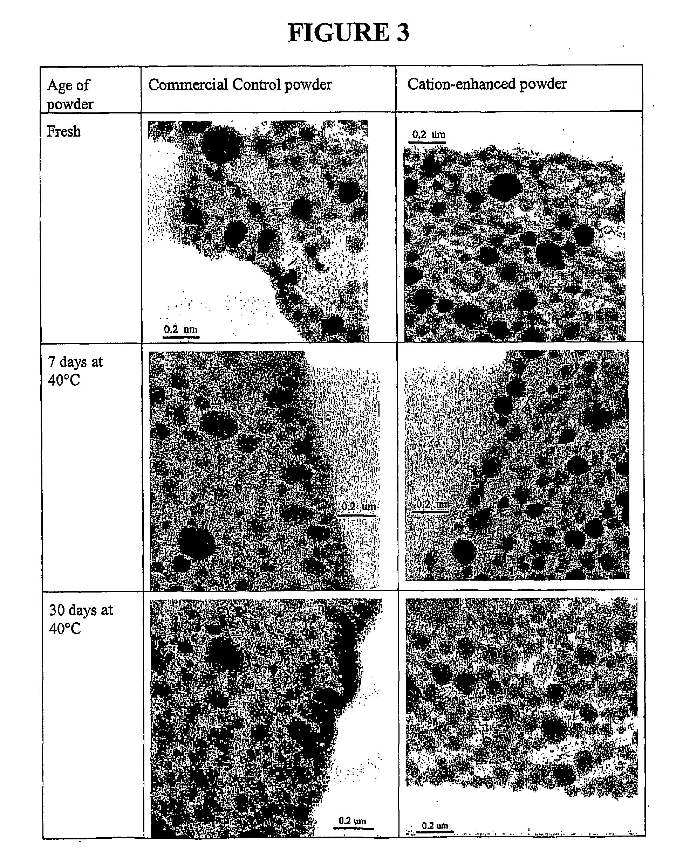

Figure 1 is a graph of cold water solubility of reconstituted MPC 85 manufactured with and without added sodium ions at a range of hydration times (with and without storage at 40°C for 7 days).
   •Fresh, added sodium; ○Fresh, no added sodium;
   ▲Stored, added sodium; ΔStored, no added sodium
Figure 2 is a graph of solubility of the MPC (over a range of reconstitution temperatures) manufactured in the larger scale trial with and without added sodium ions at a range of temperatures.
   OFresh ,added sodium; • Fresh, no added sodium;
   □Stored at 40°C for 7 days, added sodium; ■Stored at 40°C for 7 days, no added sodium;
   Δ Stored at 40°C for 1 month, added sodium; ▲Stored at 40°C for 1 month, no added sodium;
   ○ Control powder stored at 40°C for 7 days and reconstituted in salt water
Figure 3 shows electron micrographs of control and cation-enhanced MPC85 powders (0.045 mol sodium/100g protein) manufactured on a commercial plant that have been stored at 40°C for differing lengths of time.

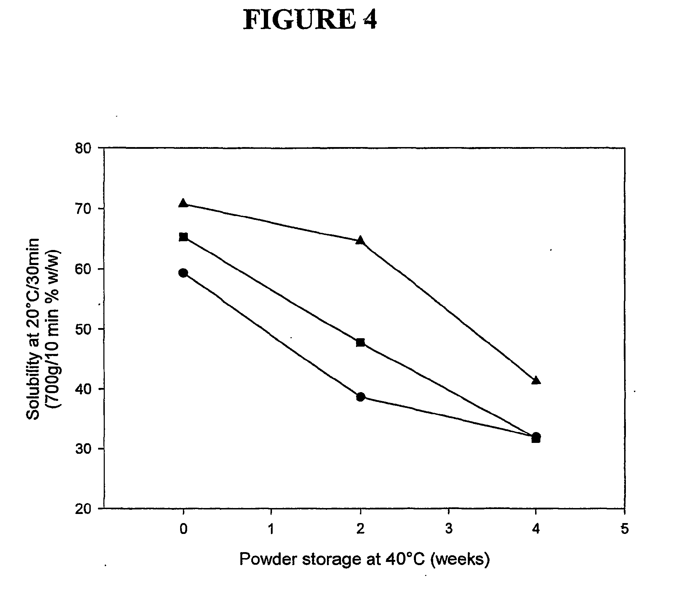

Figure 4 shows the effect of storage at 40°C on solubility of MPC85 powders with increasing concentrations of added cation (• - sample E (control); **■** - sample F (0.06 moles/100g protein); ▲ - sample G (0.10 moles/100g protein)) reconstituted in water at 20°C.

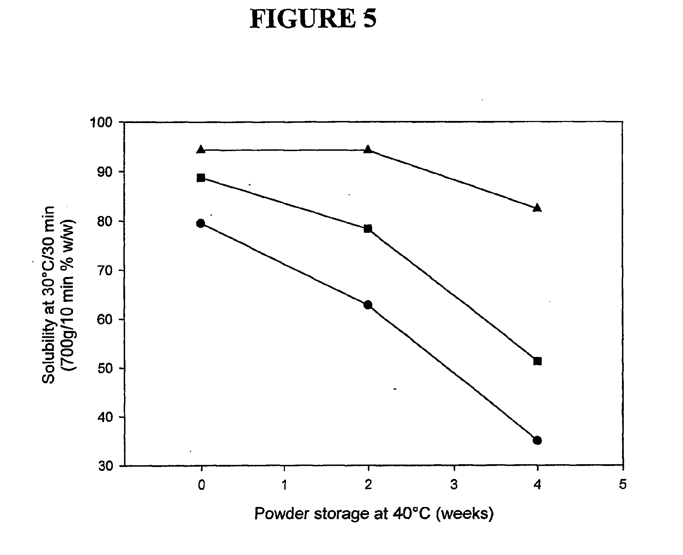

Figure 5 shows the effect of storage at 40°C on solubility of MPC85 powders with increasing concentrations of added cation (• - sample E (control); ■ - sample F (0.06 moles/100g protein); ▲ - sample G (0.10 moles/100g protein)) reconstituted in water at 30°C.

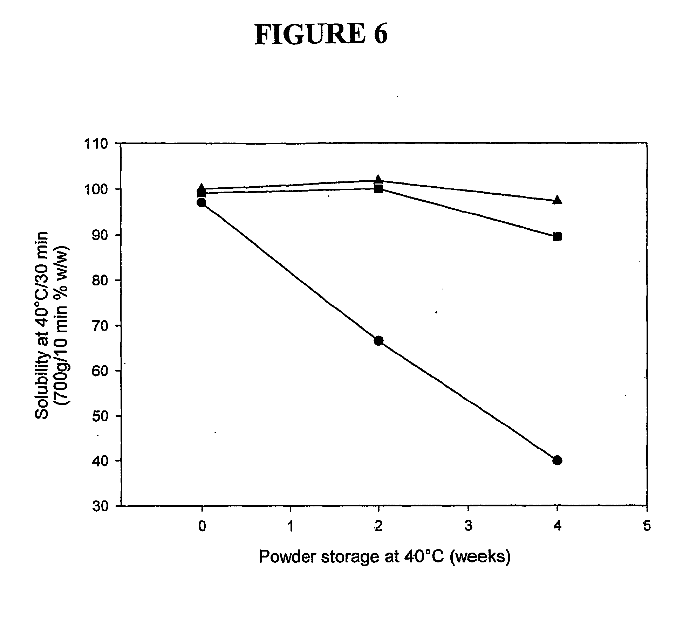

Figure 6 shows the effect of storage at 40°C on solubility of MPC85 powders with increasing concentrations of added cation (• - sample E (control); ■ - sample F (0.06 moles/100g protein); ▲ - sample G (0.10 moles/100g protein)) reconstituted in water at 40°C.

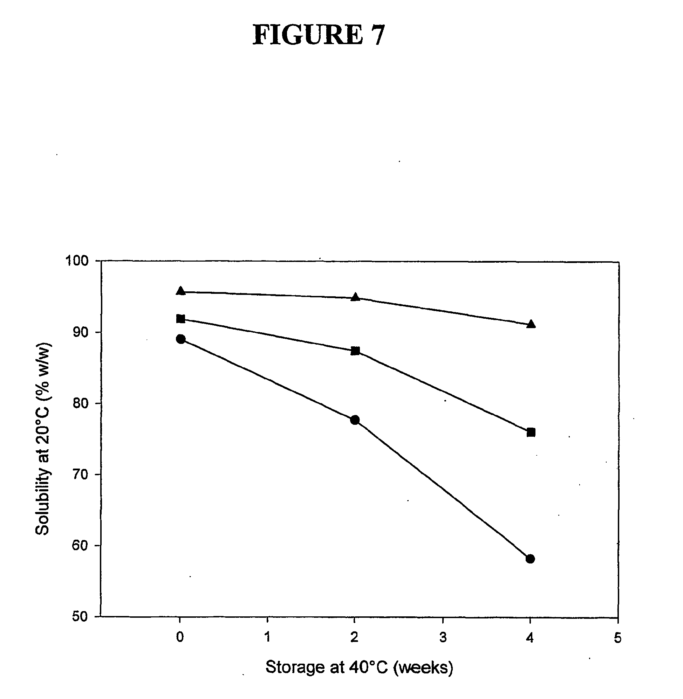

Figure 7 shows the effect of storage at 40°C on solubility of MPC70 powders with increasing concentrations of added cation (• - sample J (control); ■ - sample I (0.06 moles/100g protein); ▲ - sample J (0.11 moles/100g protein)) reconstituted in water at 20°C.

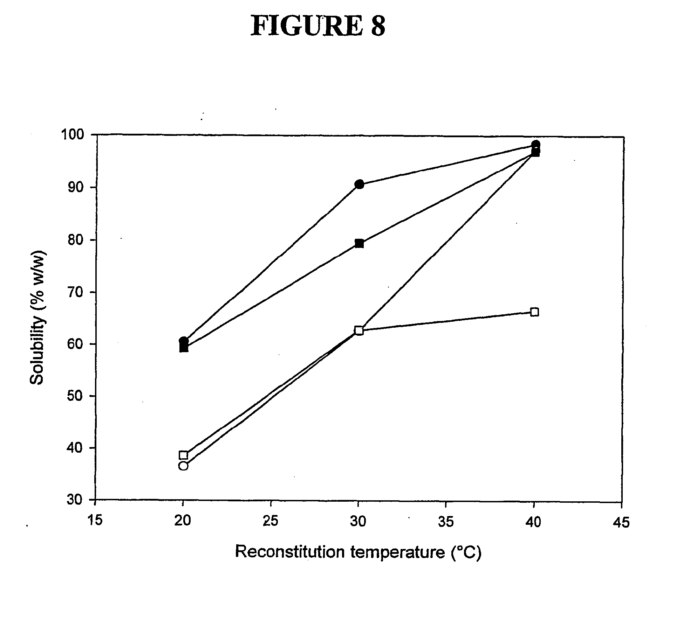

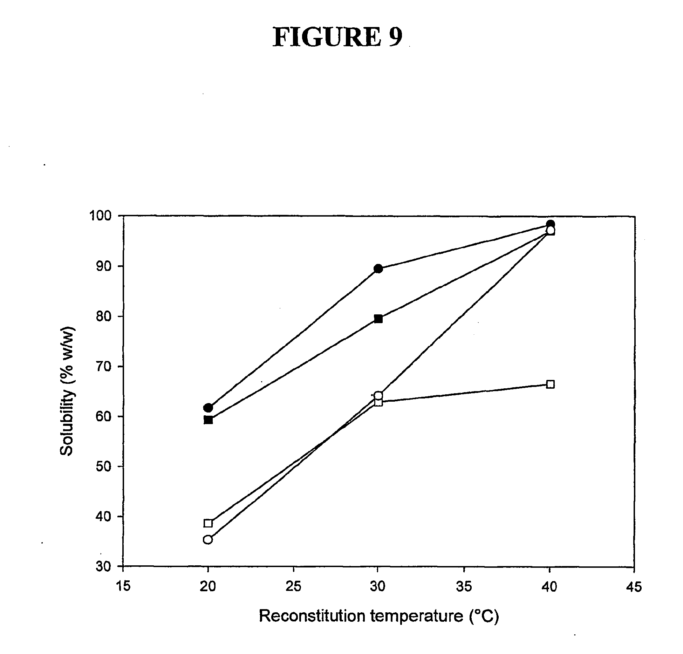

Figure 8 shows the effect of storage at 40°C (closed symbols fresh; open symbols 2 weeks storage) on solubility of MPC85 powders with (• - sample K) and without (■ - sample E) added sodium cations (0.030 moles/100g protein) reconstituted in water over a range of temperatures. Figure 9 shows the effect of storage at 40°C (closed symbols fresh; open symbols 2 weeks storage) on solubility of MPC85 powders with **(•** - sample L) and without **(■** - sample E) added potassium cations (0.030 moles/100g protein) reconstituted in water over a range of temperatures.

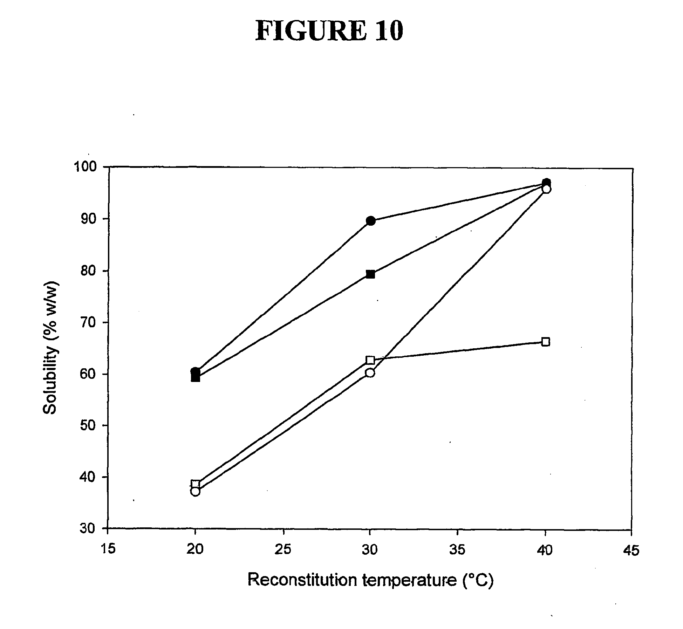

Figure 10 shows the effect of storage at 40°C (closed symbols fresh; open symbols 2 weeks storage) on solubility of MPC85 powders with (• - sample M) and without (■ - sample E) added potassium cations (0.023 moles/100g protein) reconstituted in water over a range of temperatures.

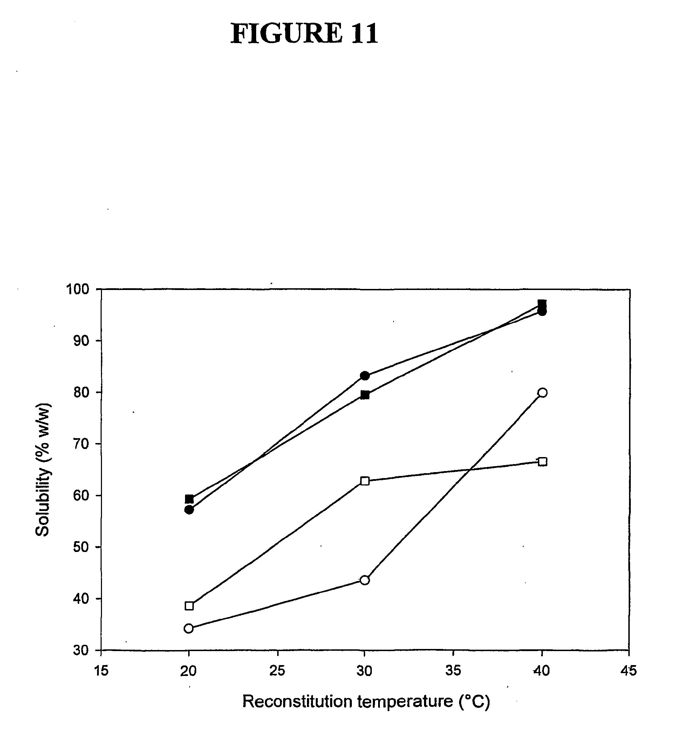

Figure 11 shows the effect of storage at 40°C (closed symbols fresh; open symbols 2 weeks storage) on solubility of MPC85 powders with (• - sample N) and without (■ - sample A) a mixture of added potassium cations (0.031 moles/100g protein) and calcium cations (0.006 moles/100g protein) reconstituted in water over a range of temperatures.

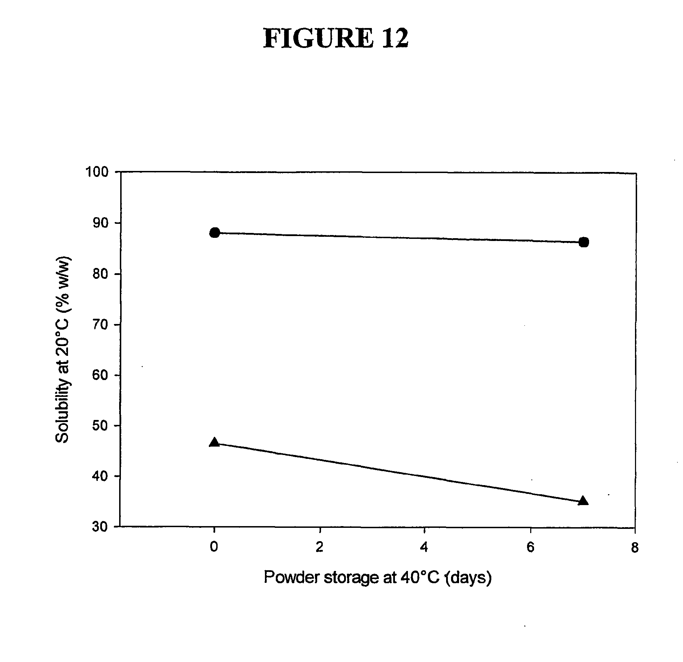

Figure 12 shows the solubility/powder storage profiles of a commercial MPC85 powder (▲) and the same commercial MPC85 powder that has been reconstituted at 50°C, had sodium and potassium cations added (total cation addition of 0.221 moles per 100g) and then redried (•) (Sample ○ - Table 1).

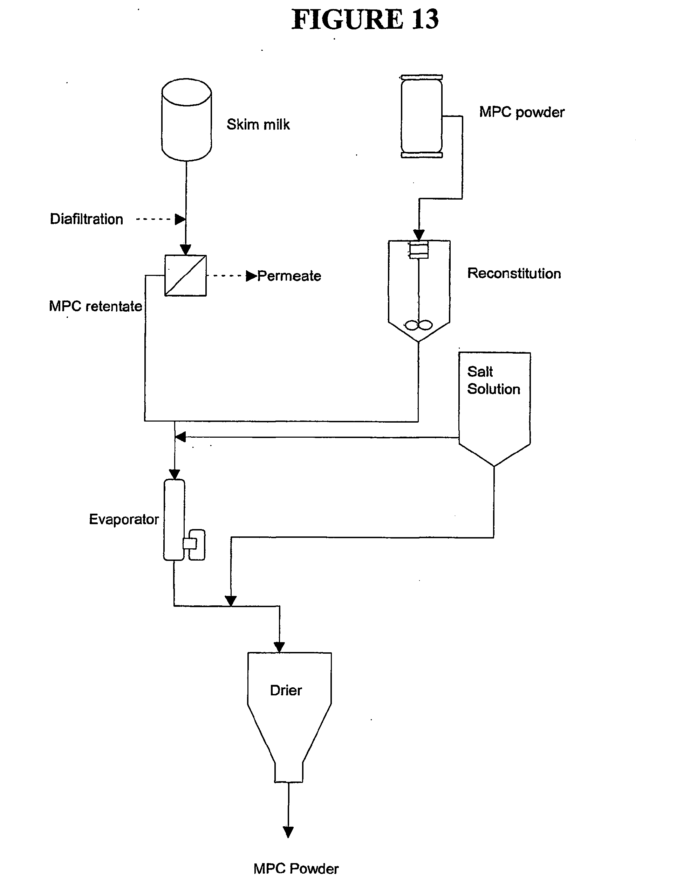

Figure 13 is a schematic diagram of cation enhanced MPC manufacture.

### EXAMPLES

The following examples further illustrate practice of the invention. Table 1 shows the amount of added cation for samples A-O described in the Examples.

**Table 1 The added cation composition of the experimental MPC powders described in the Examples.**

| Powder type and sample ID | Moles of cation added to MPC retentate (as chloride) | | |
|---|---|---|---|
| | Na (moles/100g protein) | K (moles/100g protein) | Ca (moles/100g protein) |
| (A) MPC85 | 0.05 | | |
| (B) Small-scale MPC85 control | | | |
| (C) Large-scale MPC85 | 0.045 | | |
| (D) Large-scale MPC85 control | | | |
| (E) Pilot-scale MPC85 control | | | |
| (F) Pilot-scale MPC85 | 0.06 | | |
| (G) Pilot-scale MPC85 | 0.10 | | |
| (H) Pilot-scale MPC70 control | | | |
| (I) Pilot-scale MPC70 | 0.06 | | |
| (J) Pilot-scale 0 | 0.11 | | |
| (K) Pilot-scale MPC85 | 0.030 | | |
| (L) Pilot-scale MPC85 | | 0.030 | |
| (M) Pilot-scale MPC85 | | 0.023 | |
| (N) Pilot-scale MPC85 | | 0.031 | 0.006 |
| (O) Small-scale MPC85 | 0.081 | 0.140 | |

### EXAMPLE 1- Small Scale Demonstration of Process

An MPC retentate is produced when skim milk is subjected to concentration on an ultrafiltration (or a microfiltration) membrane (Koch S4 HFK 131 type membranes having a nominal molecular cut-off of 10,000 daltons) to produce an MPC retentate. Depending on the concentration factor used, the MPC retentate will have a protein content in the range of 42 to 85% of the dry matter as milk protein.

Commercially manufactured MPC85 retentate (20% w/w total solids) from Anchor Products Hautapu New Zealand was obtained and split into two batches of 5 litres.

To one batch sodium ions, in the form of its chloride salt, were added to the retentate at the same protein:sodium ratio as found in skim milk (0.05 moles sodium/100g protein). 30.91 g of NaCl dissolved in 100ml of deionised water was added to 5 litres of retentate and mixed at 40°C for 90 minutes.

The second batch was used as a control. To the control batch (5 litres of retentate) 100ml of deionised water was added and mixed at 40°C for 90 minutes.

Both batches of retentate were dried on a laboratory spray drier. The drier operating parameters were: inlet air temperature 190°, outlet air temperature 90°C.

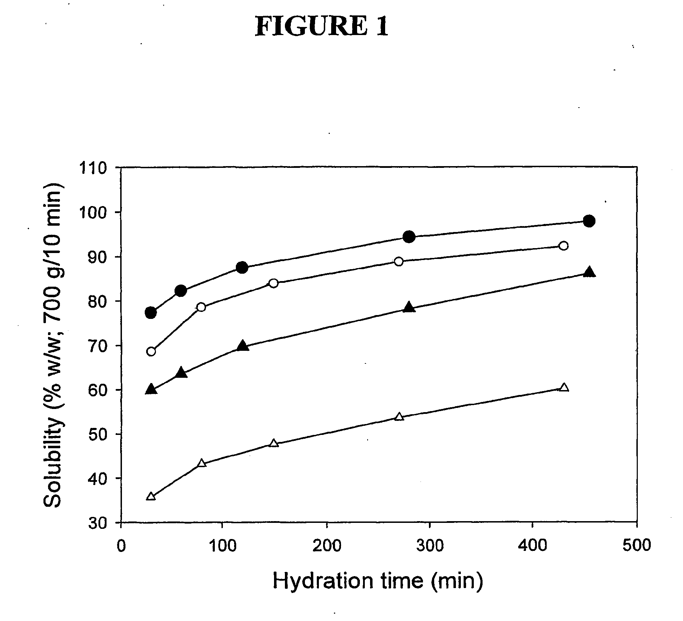

The cold water solubility of the powder was determined at 20°C. A 5% w/w solution for each was prepared in cold water (20°C). Samples were extracted 30, 60,120, 280 and 455 minutes of reconstitution and spun in a centrifuge at 700g for 10 minutes. The total solids content of the supernatant from each sample was compared to the total solids of the bulk solution to give a percent solubility. This data was plotted to give the cold water solubility profile shown in Figure 1. The cation-enhanced product (sample A - Table 1) was more soluble than the control (sample B - Table 1). The effect was more pronounced after storage for 7 days at 40°C (see Figure 1).

### EXAMPLE 2 - Larger Scale Demonstration of the Process

A larger scale trial was conducted to manufacture 60 kg of MPC85 powder with an added salt (NaCl) to give a final added sodium concentration in the powder of 0.045 mol/1.00g protein (sample C -Table 1) and 60 kg of control MPC85 with no salt addition (sample D - Table 1).

The trial was performed by pumping a brine solution (20% w/w NaCI) into MPC85 retentate prior to evaporation and drying. The addition of the brine solution diluted the retentate by about 0.5%. The brine solution had a contact time with the retentate in the pipe-work prior to the evaporator of about 5-10 minutes.

The powders were stored at 40°C in sealed foil sachets. 40°C is a temperature that powder can typically reach during transportation, particularly in the holds of ships and on wharves and in warehouses in warm climates. Deterioration reactions in powders happen at a faster rate at 40°C than at lower temperatures. Time-scales for differences in powders at lower temperatures such as 20°C will likely be an order of magnitude longer. According to Labuza (in An integrated approach to food chemistry: Illustrative cases. In Food Chemistry, Fenema, O. (ed). Pp 913-938, (1985)) a shelf life of 1 month at 40°C can be equivalent to 18 months shelf life at 23°C for dehydrated foods.

The temperature solubility profiles were obtained by mixing samples of the powders in water for 30 minutes at a range of temperatures and then centrifuging at 700g for 10 minutes. The solubility was determined by comparison of the supernatant total solids with the bulk solution total solids as in Example 1.

The solubility profile of the powders made on large scale were somewhat different from the powders made on pilot plant scale and small scale. This difference is probably due to the use of different driers. No difference in solubility was detected between the solubility/temperature profiles of the fresh powder with added salt and the fresh control powder with no added salt.

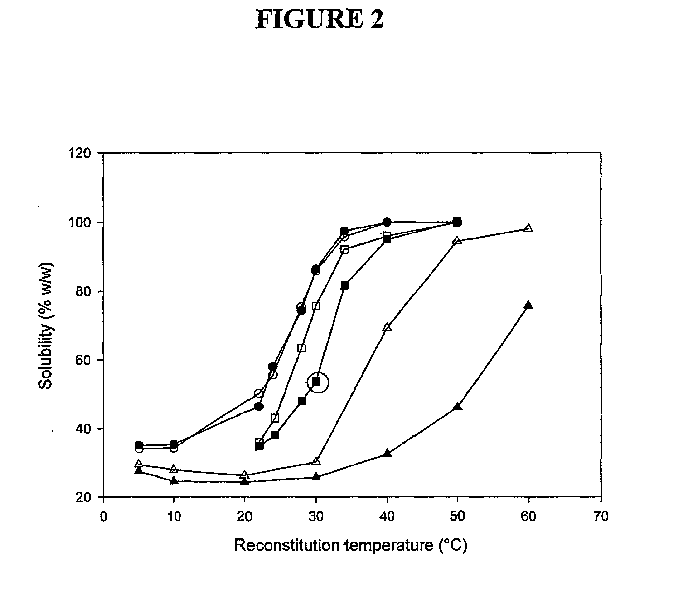

A difference was observed after the powders have been stored at 40°C for 7 days with the cation-enhanced powder showing significant improvement in solubility compared to the control powder. The results are shown in Figure 2.

After storing the powder at 40°C for one month the difference is even more dramatic. For example at a reconstitution temperature of 50°C the cation-enhanced powder has a solubility of 95% whereas the control powder has a solubility of less than 46%.

The transmission electron microscopy images shown in Figure 3 also demonstrate the stability of the cation-enhanced powders. One can clearly see that the protein (stained black in the images) in the control powder changes on storage at 40°C whereas the morphology of the cation-enhanced powder remains constant. The implication of these images is that the protein in the cation-enhanced powders maintains its functional properties for longer than standard high protein powders.

The improved solubility on storage (even at large scale) will enable more consistent product to reach customers and affords the powder with more robustness with regard to temperature abuse during shipping and storage prior to use.

### EXAMPLE 3 - Addition of Cations - Cations After the Drying Process

This experiment was carried out to determine if the improved solubility in the stored powder of Example 2 could be duplicated simply by adding salt to dried MPC85. A 10g sample of the stored (7 days at 40°C) control powder (sample D - Table 1) was dissolved in a 190g solution (30°C) containing the same amount of dissolved salt (0.2288g) that would be added if 10g of cation-enhanced powder were being dissolved. The composition of this control solution with added salt was therefore no different to a solution of cation-enhanced powder. The solubility of the stored control sample was no different dissolved in a salt solution (53.34% w/w) than it was dissolved in pure water (53.68% w/w). This experiment shows that surprisingly the addition of salt prior to drying is necessary to confer improved solubility.

### EXAMPLE 4 - Effect Increasing Cation Concentration

The experiments manufacturing MPC85 with added cations (refer Samples E,F and G - Table 1) show that the effect of cation addition is more pronounced with increasing cation concentration (figures 4 to 6). At low cation concentration the effect on solubility in fresh powder is minimal but on storage these powders exhibit enhanced solubility, particularly at high temperatures. Powders with higher cation concentrations exhibit enhance solubility even in fresh powder and at low temperatures.

### EXAMPLE 5 Cation - enhancement for MPC70

In this experiment sodium cations were added at two different levels to MPC70 retentate prior to drying (samples I and J - Table 1). A control powder (sample H- Table 1) with no added cations was also made with the same batch of retentate. The solubility at 20°C/storage stability profiles for these powders are shown in figure 7. As with cation addition to MPC85, the effect on solubility increases with storage time and with increasing cation concentration.

### EXAMPLE 6 - Comparison of Different Monovalent species

The positive effect of cation addition on enhancing the solubility of MPC is shown by comparison of the solubility storage figures (figures 8 to 10) for sodium-enhanced (Table 1 - sample K) and potassium-enhanced (Table 1- samples L and M) powders which have been made with the same molar addition of cation and the same mass of salt added per 100g protein respectively. These figures show that different species of monovalent cations have very similar effects on the solubility/storage properties of MPC powders.

### EXAMPLE 7 - Divalent Cation Addition

The solubility/storage profile (Figure 11) for powder N (refer Table 1) shows that with the technology described here it is possible to add divalent cations, in combination with a monovalent cation, with no detrimental effect in the solubility of fresh powder reconstituted in water between 20 to 40°C. On storage at 40°C the divalent enhanced powder shows improved solubility characteristics, when reconstituted at 40°C, over the control powder. The improved solubility characteristics were not seen at reconstitution temperatures of 20°C nor 30°C.

### EXAMPLE 8 - Conversion of poor powder to good powder

In this example a commercial MPC85 powder was reconstituted at 50°C, had sodium (0.081 moles/100g protein) and potassium (0.14 moles/100g protein) ions added (in the form of their chloride salts) and then re-dried to give a cation-enhanced powder (sample O in Table 1). Figure 12 shows that compared to the base starting powder, the cation-enhanced powder was converted to an MPC powder with a significantly improved cold (20°C) solubility profile. The solubility of the converted powder is 88% fresh and 87% after 7 days storage at 40°C compared to 46 and 35% solubility for the original powder respectively.

This example shows that application of the technology described here can convert-old stock with poor solubility properties into powder with excellent solubility.

### EXAMPLE 9 - Cheese milk extension

Four MPC samples with 85% milk protein were tested in cheese making.
3.47kg of fresh skim milk containing 4.38% protein and 0.18% fat was the starting material. Fresh cream (505grams) containing 2.06% protein and 41.2% fat was added under medium shear to the fresh skim milk previously brought to 32.5°C. The resulting milk solution contained 4.07% protein and 5.36% fat as determined by Milkoscan Analyses.

The milk solution was divided into four batches. To each batch a different MPC containing 85% protein was added. One batch received the fresh large scale control MPC85 (sample D-Table 1), a second received a large scale control MPC85 (sample D - Table 1) that had been stored at 40°C for 7 days. The third batch received the fresh large scale cation enhanced MPC85 (sample C-Table 1) and the fourth batch received large scale cation enhanced MPC85 (sample C- Table 1) stored at 40°C for 7 days. The reconstitution was carried out at 4.5 to 8.5°C.

All powders dispersed into the milk well. No problems were noticed with the powders lumping, not wetting or floating on top of the milk. The pH of all the reconstituted milks were similar with the pH between 6.5 to 6.6 when measured at 32.5°C.

Cheese manufacture was by a standard cheddar process. The rennet used was Australian DS. After two days the cheese preparations were examined. In the two cheese preparations to which control MPC85 (fresh and stored at 40°C) many large grey translucent nuggets were obvious. The nuggets in the cheese preparation made from control MPC85 that had been stored at 40°C for 7 days were larger and more numerous than those present in the cheese preparation made from the fresh control MPC85. The cheese preparations made from the cation-enhanced MPC85 both contained only a few very small strands of nugget material.

Observations made during the cheese making steps showed that the starters performed excellently in all the re-constituted milks and that the pH of all the milks dropped to 6.45 to 6.46 over the 15 minute incubation period. All the preparations formed a coagulum at 40minutes after rennet was added. For all four samples the cooked curd character was excellent. None of the curds presented any problems during the salting and pressing steps.

When used for cheese extension applications the cation-enhanced MPC was judged to be a significant improvement, particularly when comparing the powders stored at 40°C for 7 days, over the control MPC85.

## Claims

1. A method for preparing a dried enhanced-solubility milk protein concentrate (MPC) or milk protein isolate (MPI) product comprising:
(a) providing an MPI or MPC having at least 70% dry matter as milk protein in aqueous solution/suspension;
(b) adding at least one monovalent salt in an amount that confers enhanced solubility on the product when dried; and
(c) drying the product;
wherein the amount of cation added is 0.013-0.30 moles of cation per 100g protein.

2. A method for preparing a dried enhanced-solubility MPC or MPI product comprising:
(a) providing a skim milk in the form of an aqueous solution/suspension;
(b) adding at least one monovalent salt;
(c) concentrating the solution obtained by ultrafiltration, optionally with diafiltration to form an MPI or MPC having at least 70% dry weight as protein and
(d) drying to prepare a dried product with enhanced solubility;
wherein the amount of cation added is 0.013-0.30 moles of cation per 100g protein.

3. A method of preparing a dried enhanced-solubility MPC or MPI comprising:
(a) providing a skim milk solution in the form of an aqueous solution/suspension;
(b) concentrating the skim milk by ultrafiltration, with diafiltration, to form an MPI or MPC having at least 70% dried weight as protein;
(c) drying to prepare a dried product with enhanced solubility;
wherein the diafiltration medium comprises at least one monovalent salt and the MPC or MPI formed contains 0.013-0.30 moles of added cation per 100g protein.

4. A method as claimed in claim 1 wherein between steps (a) and (b) part of the water is removed from the MPI or MPC in aqueous solution/suspension.

5. A method as claimed in claim 4 wherein the dewatering step is an evaporation step.

6. A method as claimed in any one of claims 1-4 wherein the salt is a potassium or sodium salt.

7. A method as claimed in claim 6 wherein the salt is sodium chloride.

8. A method as claimed in any one of claims 1-7 wherein at least one divalent salt is added prior to the drying step.

9. A method as claimed in claim 8 wherein the divalent salt is a calcium salt.

10. A method as claimed in any one of claims 1-9 wherein 0.035-0.25 moles of cation is added per 100g protein.

11. A method as claimed in claim 10 wherein 0.035-0.10 moles of cation is added per 100g protein.

12. A method as claimed in claim 1 or claim 4 wherein the MPI or MPC in aqueous solution/suspension is formed by reconstituting a dried MPI or MPC at a temperature sufficient to solubilise it.

13. A method of cheese manufacture comprising the step of extending the milk starting material with a dried MPC or MPI prepared by a method as claimed in any one of claims 1-12.

## Patentansprüche

1. Verfahren zum Herstellen eines getrockneten Milchproteinkonzentrat-(MPC)- oder Milchproteinisolat-(MPI)-Produkts mit verbesserter Löslichkeit, welches umfaßt:
(a) Bereitstellen eines MPI oder MPC mit wenigstens 70% Trockenmaterial als Milchprotein in wäßriger Lösung/Suspension;
(b) Zugeben wenigstens eines einwertigen Salzes in einer Menge, die eine verbesserte Löslichkeit auf das Produkt, wenn es getrocknet ist, überträgt; und
(c) Trocknen des Produkts;
wobei die Menge an zugegebenem Kation 0,013-0,30 Mol Kation pro 100 g Protein ist.

2. Verfahren zum Herstellen eines getrockneten MPC- oder MPI-Produkts mit verbesserter Löslichkeit, welches umfaßt:
(a) Bereitstellen einer Magermilch in der Form einer wäßrigen Lösung/Suspension;
(b) Zugeben wenigstens eines einwertigen Salzes;
(c) Konzentrieren der erhaltenen Lösung durch Ultrafiltration, optional mit Diafiltration, um ein MPI oder MPC mit wenigstens 70 Trockengewichtsprozent als Protein zu bilden und
(d) Trocknen, um ein getrocknetes Produkt mit verbesserter Löslichkeit herzustellen;
wobei die Menge an zugegebenem Kation 0,013-0,30 Mol Kation pro 100 g Protein ist.

3. Verfahren zum Herstellen eines getrockneten MPC oder MPI mit verbesserter Löslichkeit, welches umfaßt:
(a) Bereitstellen einer Magermilchlösung in der Form einer wäßrigen Lösung/Suspension;
(b) Konzentrierten der Magermilch durch Ultrafiltration, mit Diafiltration, um ein MPI oder MPC mit wenigstens 70 Trockengewichtsprozent als Protein zu bilden;
(c) Trocknen, um ein getrocknetes Produkt mit verbesserter Löslichkeit herzustellen;
wobei das Diafiltrationsmedium wenigstens ein einwertiges Salz umfaßt und das gebildete MPC oder MPI 0,013-0,30 Mol an zugegebenem Kation pro 100 g Protein enthält.

4. Verfahren nach Anspruch 1, wobei zwischen Schritten (a) und (b) ein Teil des Wassers aus dem MPI oder MPC in wäßriger Lösung/Suspension entfernt wird.

5. Verfahren nach Anspruch 4, wobei der Entwässerungsschritt ein Verdampfungsschritt ist.

6. Verfahren nach einem der Ansprüche 1 bis 4, wobei das Salz ein Kalium- oder Natriumsalz ist.

7. Verfahren nach Anspruch 6, wobei das Salz Natriumchlorid ist.

8. Verfahren nach einem der Ansprüche 1 bis 7, wobei wenigstens ein zweiwertiges Salz vor dem Trocknungsschritt zugegeben wird.

9. Verfahren nach Anspruch 8, wobei das zweiwertige Salz ein Calciumsalz ist.

10. Verfahren nach einem der Ansprüche 1 bis 9, wobei 0,035-0,25 Mol Kation pro 100 g Protein zugegeben werden.

11. Verfahren nach Anspruch 10, wobei 0,035-0,10 Mol Kation pro 100 g Protein zugegeben werden.

12. Verfahren nach Anspruch 1 oder Anspruch 4, wobei das MPI oder MPC in wäßriger Lösung/Suspension gebildet wird durch Wiederherstellen eines getrockneten MPI oder MPC bei einer Temperatur, die ausreichend ist, um es löslich zu machen.

13. Verfahren zur Käseherstellung, umfassend den Schritt eines Ausweitens des Milchausgangsmaterials mit einem getrockneten MPC oder MPI, das durch ein Verfahren hergestellt wird, wie es in einem der Ansprüche 1 bis 12 beansprucht wird.

## Revendications

1. Procédé pour préparer un produit de concentré protéique lacté (MPC) ou d'isolat protéique lacté (MPI) en poudre, à solubilité améliorée, consistant à :
a) fournir un MPI ou MPC ayant au moins 70% de matière sèche en tant que protéine lactée en solution/suspension aqueuse ;
b) ajouter au moins un sel monovalent dans une quantité qui confère audit produit une solubilité améliorée quand il aura séché ; et
c) sécher le produit ;
dans lequel la quantité de cation ajoutée est de 0,013-0,30 mole de cation pour 100 g de protéine.

2. Procédé pour préparer un produit de MPC ou MPI en poudre, à solubilité améliorée, consistant à :
a) fournir un lait écrémé sous la forme d'une solution/suspension aqueuse;
b) ajouter au moins un sel monovalent ;
c) concentrer la solution obtenue par ultrafiltration, éventuellement avec diafiltration pour former un MPI ou MPC ayant au moins 70% de poids à l'état sec en tant que protéine et
d) sécher pour préparer un produit en poudre avec une solubilité améliorée ;
dans lequel la quantité de cation ajoutée est de 0,013-0,30 mole de cation pour 100 g de protéine.

3. Procédé pour préparer un MPC ou MPI en poudre, à solubilité améliorée, consistant à :
a) fournir une solution de lait écrémé sous la forme d'une solution/suspension aqueuse ;
b) concentrer le lait écrémé par ultrafiltration, avec diafiltration, pour former un MPI ou MPC ayant au moins 70% de poids à l'état sec en tant que protéine ;
c) sécher pour préparer un produit en poudre à solubilité améliorée ;
dans lequel le milieu de diafiltration comprend au moins un sel monovalent et le MPC ou MPI formé contient 0,013-0,30 mole de cation ajouté pour 100 g de protéine.

4. Procédé tel que revendiqué dans la revendication 1, dans lequel, entre les étapes (a) et (b), une partie de l'eau est éliminée du MPI ou MPC en solution/suspension aqueuse.

5. Procédé tel que revendiqué dans la revendication 4, dans lequel l'étape de déshydratation est une étape d'évaporation.

6. Procédé tel que revendiqué dans une quelconque des revendications 1-4, dans lequel le sel est un sel de potassium ou de sodium.

7. Procédé tel que revendiqué dans la revendication 6, dans lequel le sel est du chlorure de sodium.

8. Procédé tel que revendiqué dans une quelconque des revendications 1-7, dans lequel au moins un sel divalent est ajouté avant l'étape de séchage.

9. Procédé tel que revendiqué dans la revendication 8 dans lequel le sel divalent est un sel de calcium.

10. Procédé tel que revendiqué dans une quelconque des revendications 1-9, dans lequel 0,035-0,25 mole de cation est ajouté pour 100 g de protéine.

11. Procédé tel que revendiqué dans la revendication 10 dans lequel 0,035-0,10 mole de cation est ajouté pour 100 g de protéine.

12. Procédé tel que revendiqué dans la revendication 1 ou la revendication 4, dans lequel le MPI ou MPC en solution/suspension aqueuse est formé en reconstituant un MPI ou MPC en poudre à une température suffisante pour le solubiliser.

13. Procédé de fabrication de fromage comprenant l'étape d'étendre la matière de départ lactée avec un MPC ou MPI en poudre préparé par un procédé tel que revendiqué dans une quelconque des revendications 1-12.
